# FASCICULE DE BREVET EUROPEEN

(11) **EP 0 512 874 B1**
(45) Date de publication et mention de la délivrance du brevet: **06.12.1995**
(21) Numéro de dépôt: 92400976.4
(22) Date de dépôt: 07.04.1992
(51) Int. Cl.: B29C 70/00, B29C 37/00, B29C 33/00

(54) **Plaque intercalaire pour la fabrication de panneaux de grandes dimension en matériau fibres-ciment et procédé et moule pour sa fabrication**
Distanzplatte für die Herstellung von gross dimensionierten Platten aus Faserzement, das Herstellungsverfahren und die Form
Spacer element for the production of large dimension fiber-cement panels, the process of manufacture and the mould

(30) Priorité: 09.04.1991 FR 9104302
(43) Date de publication de la demande: 11.11.1992
(73) Titulaire: CONSTRUCTIONS MECANIQUES DE NORMANDIE, F-75008 Paris (FR)
(72) Inventeur: Marc, Alain Robert Daniel, F-50110 Tourlaville (FR); Leroy, Jean-Pierre, F-50460 Querqueville (FR); Ferriot, Luc, F-50130 Octeville (FR)

(56) Documents cités:
- EP-A- 0 320 302
- GB-A- 889 486
- GB-A- 2 079 667
- US-A- 4 952 355
- US-A- 4 992 127

## Description

L'invention concerne la fabrication de plaques intercalaires (10) destinées à être utilisées pour la fabrication, à chaud et sous très haute pression, de panneaux de grandes dimensions en matériau fibres-ciment. La fabrication des plaques intercalaires (10) consiste à : enduire à froid une empreinte de moulage (3) et un couvercle (5) de moule (1) avec un produit démoulant compatible avec la résine contenue dans le matériau à mouler; disposer dans le moule (1) un voile sec en mat de verre non tissé (13) formant une couche externe; disposer, sur ce voile, plusieurs couches de tissus unidirectionnels en verre (12), préimprégnés de résine, empilées avec des orientations différentes; disposer sur cet empilement de tissus, un autre voile sec en mat de verre non tissé (13), constituant une autre couche externe; et après fermeture du moule (1) réaliser un traitement de polymérisation à une température comprise entre 115°C et 125°C et sous une pression comprise entre 3 et 5 bars; la matrice (2) présente, autour de l'empreinte (3), une gorge (6) pour recueillir l'excès de résine qui s'y écoule par un intervalle (9).

### EXPOSE DE L'INVENTION

La présente invention a pour cadre la fabrication de panneaux de grandes dimensions continues en matériaux de construction fibres-ciment imitant des reliefs naturels (pierre, ardoise, etc...), ci-après dénommés simplement "matériaux".

De tels panneaux de grandes dimensions sont fabriqués par lots de plusieurs panneaux, en constituant une structure sandwich faisant alterner des couches de matériau et des plaques intercalaires (10); cette structure sandwich chauffe naturellement (le matériau fibres-ciment étant exothermique) à une température de l'ordre de 80°C en même temps qu'elle est soumise à une compression transversale (appliquée sur les grandes faces extrêmes) très élevée, de l'ordre de 300 bars.

Les panneaux finalement obtenus présentent des caractéristiques d'épaisseur, de planéité, d'état de surface qui doivent satisfaire à des critères sévères. Il est pour cela nécessaire que les plaques intercalaires (10) satisfassent, elles aussi, à des exigences précises de stabilité et qu'elles puissent être réutilisées, de manière à réduire au maximum les coûts de fabrication.

Enfin, les panneaux doivent présenter des reliefs (ou analogues) sur au moins une de leur face, l'autre face pouvant cependant rester lisse. Il est donc nécessaire que les plaques intercalaires (10) soient elles aussi agencées de façon correspondante, par exemple avec une face lisse (15) et une face munie de relief (14).

Jusqu'à présent, on a utilisé des plaques intercalaires (10) constituées en polyester ou en acier. Toutefois, de telles plaques (10) ne donnent pas satisfaction : les plaques intercalaires (10) en polyester sont l'objet d'importantes déformations et les faces principales des plaques intercalaires (10) en acier sont l'objet d'un "colmatage" qui se présente sous deux aspects :
- Colmatage proprement dit (c'est à dire encrassement et bouchage partiel ou total) des reliefs (14) sur la face de la plaque intercalaire (10) qui en est munie;
- Adhésion du matériau sur la plaque intercalaire (10), y compris sur les parties non munies de reliefs et sur la face lisse (15).

Pour maintenir une qualité suffisante des panneaux produits au cours de cycles successifs, il est donc nécessaire de nettoyer soigneusement les plaques intercalaires (10) après chaque processus de fabrication. Ce nettoyage est long et coûteux et il n'est de toute façon possible qu'un nombre restreint de fois. La durée de vie des plaques intercalaires (10) est donc limitée (environ cinquante cycles). Des tentatives d'emploi d'un produit démoulant n'ont pas été couronnées de succès et n'ont pas permis de prolonger la durée de vie des plaques intercalaires (10).

En outre, ces problèmes d'encrassement des plaques intercalaires (10) limitent l'importance des reliefs (14) prévus sur au moins l'une des faces et il n'est pas possible actuellement que la profondeur de ces reliefs (14) dépasse 0,5 à 1 mm; au-delà de cette limite, le nettoyage devient par trop difficile et l'encrassement définitif intervient trop rapidement.

En conclusion, il existe actuellement un besoin non satisfait pour des plaques intercalaires (10) plus performantes que celle utilisées jusqu'à présent, c'est à dire pour des plaques intercalaires (10) qui puissent subir un nombre élevé de cycles opérationnels sans nettoyage ou tout au moins, sans nettoyage important, qui supportent sans déformation et sans modification dimensionnelle ce nombre élevé de cycles opérationnels, et qui puissent recevoir des reliefs (14) importants, de plusieurs millimètres de profondeur, voire de l'ordre du centimètre ou plus, sans altération de ses capacités.

L'invention a précisément pour buts de proposer une plaque intercalaire (10) qui donne mieux satisfaction aux diverses exigences de la pratique et de proposer également les moyens-procédé et moule (1) de fabrication- qui permettent de réaliser concrètement une telle plaque intercalaire (10).

A ces fins, selon un premier de ses aspects, l'invention se rapporte à une plaque intercalaire (10) destinée à être utilisée pour la fabrication, à chaud et sous très haute pression, de panneaux de grandes dimensions en matériau fibres-ciment, plaque intercalaire (10) qui, étant agencée conformément à l'invention, se caractérise essentiellement en ce qu'elle est constituée en résine époxy (11) avec des faces principales présentant un état de surface glacé résultant de la polymérisation de respectivement deux couches externes constituées d'un voile sec en mat de verre non tissé (13) et encadrant un empilement de tissus unidirectionnels en verre (12), préimprégnés de résine, disposés en couches successives présentant des orientations mutuellement différentes d'une couche à la suivante.

Une plaque intercalaire (10) agencée conformément à l'invention présente une très grande rigidité, une planéité parfaite de ses faces principales et ses dimensions (notamment son épaisseur) restent, d'une plaque (10) à l'autre, dans des tolérances très serrées en raison d'un contrôle très précis de la teneur en résine (< 0,2%) de la plaque (10) achevée. En outre, ces plaques intercalaires (10) possèdent des faces principales présentant un état de surface "glacé" qui garantit une fabrication de qualité pour les panneaux en matériau fibres-ciment.

L'amélioration obtenue dans la rigidité des plaques intercalaires (10) de l'invention permet d'éliminer des systèmes raidisseurs auxquels on avait jusque là recours lors de la fabrication des panneaux en matériau fibres-ciment; il en résulte un gain dans la durée de chaque cycle de fabrication, une économie en matériels et une diminution des manutentions.

Enfin, la mise en oeuvre de couches de surfaces de type "glacées" élimine le "colmatage" qui se produisait sur les plaques intercalaires (10) antérieures. Non seulement le matériau fibres-ciment n'adhère pas sur les parties lisses (15) de plaques intercalaires (10), mais il n'adhère pas non plus dans les parties présentant des reliefs (14). On écarte ainsi la nécessité d'un nettoyage soigneux, long et coûteux. On recueille en outre la possibilité d'accroître l'importance des reliefs (14) présents sur au moins l'une des faces et il est possible de réaliser des reliefs (14), pouvant avoir une profondeur de plusieurs millimètres, voire de l'ordre d'au moins le centimètre, ce qui n'était absolument pas envisageable jusqu'à présent.

Selon un deuxième aspect, l'invention se rapporte à un procédé de fabrication de plaques intercalaires (10) destinées à être utilisées pour la fabrication, à chaud et sous très haute pression, de panneaux de grandes dimensions en matériau fibres-ciment, procédé qui, étant conçu conformément à l'invention, se caractérise essentiellement en ce qu'il comprend les étapes qui suivent réalisées avec un moule (1) présentant une matrice (2) de moulage pourvue d'une empreinte de moulage (3) obturable par un couvercle (5). Le procédé est différent des procédés habituels, tel celui décrit dans la demande EP0320302 en ce que les tissus unidirectionnels de verre (12) sont préimprégnés de résine et que la répartition de la résine est due à l'action de la pression appliquée au couvercle (5) et non à l'injection de résine et de gaz.
- On enduit une empreinte de moulage (3) avec un produit démoulant compatible avec la résine contenue dans le matériau à mouler, ce produit démoulant étant étendu à froid;
- On met en place dans le moule (1) un voile sec en mat de verre non tissé (13) formant une couche externe;
- On dispose, sur le dit voile, plusieurs couches de tissus unidirectionnels en verre (12), préimprégnés de résine (11), qui sont empilées avec des orientations mutuellement différentes d'une couche à la suivante;
- On met en place, sur l'empilement de tissus préimprégnés, un autre voile sec (13) en mat de verre constituant une autre couche externe;
- On ferme le moule (1) dont la face interne du couvercle (5) a été enduite dudit produit démoulant;
- Et on fait subir au contenu du morne (1) un traitement de polymérisation entre 115°C et 125°C et sous pression comprise entre 3 et 5 bars.

La mise en oeuvre de tissus superposés disposés avec des orientations multiples permet d'obtenir une plaque (10) possédant des qualités de résistance mécanique isotrope ou anisotrope la rendant apte à être utilisée avec succès pour la fabrication des panneaux en matériau fibres-ciment : les conditions particulièrement sévères de cette fabrication (température, pression très élevée, agressivité du matériau) n'affectent pas les caractéristiques des plaques intercalaires (10).

En outre, c'est le recours à un produit démoulant apte à migrer vers les couches externes (13), mises en place sèches, qui conduit en fin de traitement à une surface d'aspect glacé s'opposant à l'adhésion du produit cimentaire et au colmatage. D'où la possibilité non seulement de prévoir des reliefs (14) sur au moins l'une des faces des dits panneaux intercalaires (10), mais encore la liberté de choisir pour ces reliefs (14) une forme et surtout une profondeur quelconques, ce qui n'était envisageable jusqu'à présent.

Compte tenu de l'absorption de produit démoulant par les couches externes sèches (13), il est préférable, pour que le procédé se déroule de façon satisfaisante et conduise au résultat souhaité, de renouveler régulièrement le produit démoulant, par exemple toutes les deux ou trois opérations de moulage, ensuite de quoi on est assuré de l'obtention de surfaces externes parfaitement et régulièrement glacées.

Selon un troisième aspect, l'invention se rapporte à un moule (1) pour la mise en oeuvre du procédé de l'invention ci-dessus décrit. Un tel moule (1), comprenant une matrice (2) présentant une empreinte de moulage (3) et un couvercle (5) d'obturation destiné à fermer la matrice (2), se caractérise essentiellement, étant agencé selon l'invention, en ce qui la matrice (2) présente en outre une gorge (6) de recueil d'un excès de résine qui entoure l'empreinte (3) et est séparée de celle-ci par une paroi de séparation (7) ayant une hauteur sensiblement inférieure à la hauteur des parois latérales (8) de la matrice (2) entourant extérieurement la gorge (6) et en ce que le couvercle (5) repose sur les parois latérales (8) de la matrice (2), un intervalle (9) subsistant entre la paroi de séparation (7) et le couvercle (5) pour l'écoulement d'un excédent de résine depuis l'empreinte (3) jusque dans la gorge (6) de recueil.

Avantageusement, la matrice (2) de ce moule (1), au moins, est constituée en résine chargée et, de préférence, est alors fabriquée par moulage sur une forme "mère".

Un tel moule (1) peut supporter, sans endommagements et surtout sans déformations, les conditions sévères de fabrication des plaques intercalaires (10) et l'on est ainsi assuré d'une constance de qualité des plaques intercalaires (10) obtenues.

La mise en oeuvre des dispositions de l'invention permet de remédier aux inconvénients constatés dans la technique employée jusqu'à présent. Les mornes (1) constitués selon l'invention peuvent subir plusieurs dizaines (au minimum une cinquantaine) de cycles de polymérisation à 120°C sans présenter de défauts d'aspect sur leur surface active et il est possible de réaliser des surfaces principales de moulage ayant une planéité parfaite malgré les dimensions très importantes (de l'ordre de 4 m x 2 m) de ces surfaces. En outre, les déformations en cours de cycle de pressage sont réduites à un minimum malgré les pressions très élevées (de l'ordre de 300 bars) mises en jeu.

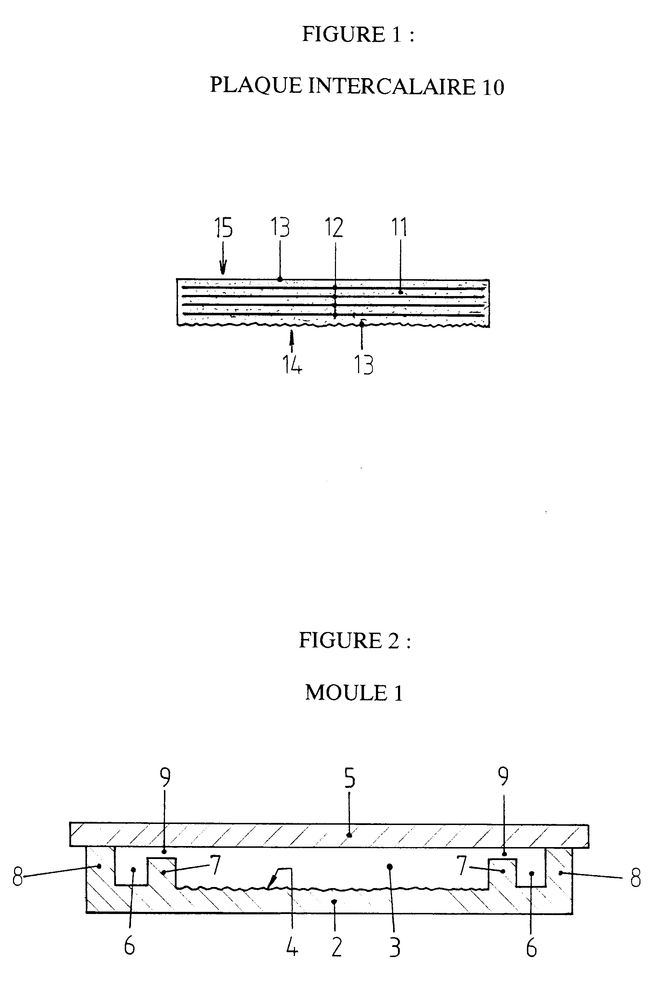

L'invention sera mieux comprises à la lecture de la description détaillée qui suit en référence avec le dessin annexé sur lequel figure en vue simplifiée la coupe transversale d'une plaque intercalaire (10), figure 1, et la coupe transversale d'un moule (1), figure 2, agencés conformément à l'invention.

La plaque intercalaire (10) représentée sur le dessin (figure 1), désignée dans son ensemble par la référence 10, est constituée en résine époxy (11) avec des faces principales présentant un état de surface glacé résultant de la polymérisation de respectivement deux couches externes constituées d'un voile sec en mat de verre non tissé (13) et encadrant un empilement de tissus unidirectionnels en verre (12), préimprégnés de résine époxy (11), disposés en couches successives présentant des orientations mutuellement différentes d'une couche à la suivante, une des faces principales au moins est munie de reliefs (14), l'autre pouvant être lisse (15).

Le moule (1) représenté sur le dessin (figure 2), désigné dans son ensemble par la référence 1, comprend une matrice (2) représentant une empreinte de moulage (3) avec un fond muni de reliefs (4) et un couvercle (5) recouvrant et fermant la matrice (2). Autour de l'empreinte de moulage (3) est prévu une gouttière (6) qui est séparée de l'empreinte (3) par une cloison (7). La cloison (7) a une hauteur inférieure à celle de la paroi latérale (8) du moule (1) qui entoure extérieurement la gouttière (6).

Ainsi le couvercle (5) repose uniquement sur la paroi latérale (8) et il subsiste un intervalle (9) entre la cloison (7) et le couvercle (5) pour qu'un excédent du produit présent dans l'empreinte (3) s'écoule dans la gouttière (6).

Il est souhaitable que l'intervalle (9) soit continu sur tout le pourtour de l'empreinte (3), et non pas discontinu, de manière que l'excédent du produit présent dans l'empreinte (3) puisse passer librement, sans gêne, car, comme cela apparaîtra plus loin, le produit en question est en principe pâteux et s'écoulerait plus difficilement dans le cas d'un intervalle (9) discontinu.

La matrice est réalisée en résine chargée, par surmoulage d'une forme "mère" qui peut servir à la fabrication de tout un jeu de matrices et qui assure de l'identité des empreintes de moulage (3), et donc des objets moulés obtenus à partir de cette pluralité de moules (1).On utilise par exemple une résine d'outillage époxy et des fibres de verre qui subissent une traitement thermique jusqu'à environ 150°C. Le moule (1) obtenu est stable et est capable de supporter plusieurs dizaines (par exemple au moins une cinquantaine dans l'état actuel de la mise au point) de cycles de polymérisation à 120°C.

En outre, on notera ici que la dilatation du moule (1), au cours d'un cycle de polymérisation est supérieure à la dilatation de la plaque intercalaire (10) (qui sera décrite plus lojn) moulée dans l'empreinte (3). Le démoulage doit alors être effectué à chaud de manière que cette opération reste facile à mener, le retrait plus important du moule (1) lors du refroidissement rendant le démoulage à froid plus délicat.

Pour la fabrication d'un intercalaire, on enduit l'empreinte de moulage (3) avec un produit démoulant constitué par une cire spéciale et un démoulant liquide. Dans l'état actuel de mise au point, les meilleurs résultats ont été obtenus en utilisant une cire telle que celle commercialisée sous la marque FERROMIR FCH16 et un démoulant liquide tel que celui commercialisé sous la marque STURGE MOLDWIZZ F57. La cire est étendue à froid, et non à chaud, afin d'éviter qu'elle durcisse, puis le démoulant liquide est versé sur cette cire; dans ces conditions, le produit s'étale parfaitement dans l'empreinte (3) et pénètre dans tous les reliefs, en particulier les reliefs tels que des ondulations présents sur le fond (4) de l'empreinte (3), aussi fins que puissent être ces reliefs.

On met ensuite en place dans l'empreinte (3) les constituants destinés à former la plaque intercalaire (10) proprement dite, à savoir :
- Une couche externe formée d'un voile sec en mat de verre non tissé (13), tel que celui commercialisé sous la référence M524 C64 par la société OWENS CORNING;
- Un empilement de tissus unidirectionnels en verre (12), préimprégnés de résine époxy (11), du type UD 900 g verre E, résine CIBA M9 ou M10, tel que le préimprégné M10 38 UD 940 commercialisé par la Société Française BROCHIER; le nombre des couches de tissu préimprégné est choisi en fonction de l'épaisseur de la plaque intercalaire (10) à obtenir; on utilisera par exemple 5 couches pour une plaque (10) devant avoir finalement une épaisseur de 4,1 mm; les tissus de couches successives sont déposés avec des orientations différentes, par exemple croisées, pour assurer l'obtention de caractéristiques mécaniques isotropes ou anisotropes pour la plaque (10) finale;
- Enfin, une nouvelle couche externe formée d'un voile sec en mat de verre non tissé (13).

Avant sa mise en place, le couvercle (5) du moule (1) est lui aussi enduit d'un produit démoulant étendu à froid.

On procède ensuite au traitement thermique du contenu du moule (1), en maintenant une température de 120°C pendant 90 mn sous une pression de 5 bars. Au cours de cette opération, le produit démoulant migre vers les deux voiles externes (13) qui épousent alors parfaitement les deux surfaces du moule (1) avec lesquelles ils sont en contact. La résine époxy (11), imprégnant les tissus (12) des couches centrales polymérise tandis que l'excédent de résine pâteuse s'écoule dans la gouttière (6) périphérique du moule (1).

On procède ensuite au démoulage de la plaque (10) à chaud, alors que le moule (1) est encore à l'état dilaté.

Ensuite de quoi on obtient une plaque intercalaire (10) en résine époxy (11) dont la teneur finale en résine est très précise (tolérance < 0,2%) garantissant la constance dimensionnelle des plaques (10) fabriquées; en outre, les faces principales de cette plaque (10) présentent un état de surface de type "glacé", procuré par la cuisson du voile externe en mat de verre non tissé (13) enduit du produit démoulant durci au contact de la surface du moule (1). Cet état de surface "glacé" est obtenu non seulement pour la face lisse (15) de la plaque (10), mais aussi pour sa face munie de reliefs (14) tels que des ondulations.

En raison de l'absorption du démoulant liquide par les couches externes, ce démoulant liquide n'est pas mis en place une fois pour toute dans le moule (1) comme cela est le cas traditionnellement et comme c'est le cas pour la cire, mais il doit être renouvelé régulièrement. Avec le démoulant liquide mentionné plus haut, il semble que son renouvellement soit nécessaire toutes les deux ou trois opérations, la cire étant quant à elle étalée une fois pour toute.

On notera ici que la qualité de l'état de surface des plaques intercalaires (10) obtenues tient directement au soin avec lequel la cire a été déposée. En particulier, un lustrage de la cire après son dépôt, par exemple à l'aide d'une peau de mouton, semble devoir améliorer notablement l'état de surface final de la plaque (10).

Grâce à l'utilisation du moule (1) précité et à la mise en oeuvre du procédé précité, on obtient des plaques intercalaires (10) possédant des caractéristiques tout à fait originales et très supérieures à celles des plaques intercalaires (10), notamment en polyester ou en acier, qui étaient utilisées jusqu'ici, en particulier pour ce qui est de la forme et du respect des épaisseurs et des cotes.

En particulier, le colmatage du matériau fibres-ciment qui apparaissait sur les plaques intercalaires (10) traditionnelles (adhésion du produit cimentaire sur les parties lisses (15), encrassage des reliefs (14) ou autres) disparait totalement avec les plaques intercalaires (10) conformes à l'invention. Il n'y a donc plus besoin, entre deux cycles de fabrication, de soumettre la plaque intercalaire (10) à un nettoyage intensif, d'où une économie considérable en produit de nettoyage et en main d'oeuvre et un gain de temps très important quant à la disponibilité des plaques (10).

En outre le matériau constitutif des plaques intercalaires (10) de l'invention supporte convenablement les chocs thermiques répétés de cycles successifs de fabrication, et il ne se produit plus les détériorations -éclatements, fissurations- qui apparaissaient sur les plaques (10) antérieures. Les plaques (10) peuvent donc être utilisées pour un grand nombre de cycles de fabrication, très supérieur à la limite d'environ cinquante cycles que peuvent subir les plaques (10) antérieures, et cela à une cadence bien supérieure.

Par ailleurs, les qualités mécaniques supérieures du matériau constitutif des plaques intercalaires (10) de l'invention, et notamment la constance des dimensions dans le temps et l'indéformabilité accrue de la plaque (10), ont permis d'accroître, lorsque cela est souhaité, les dimensions des plaques intercalaires (10) et donc des panneaux en matériau fibres-ciment qu'elles permettent de fabriquer, d'où un accroissement sensible de la production de ce seul point de vue. A titre d'exemple, il apparaît possible de fabriquer des plaques intercalaires (10) d'environ 4 m x 2 m, contre 2,6 m x 1,3 m au maximum pour les plaques intercalaires (10) en polyester utilisées actuellement.

En outre, la rigidité bien supérieure des plaques intercalaires (10) de l'invention a permis d'éliminer divers systèmes de rigidification associés jusqu'ici aux plaques (10) antérieures, d'où un gain de temps et de manutention.

Surtout l'amélioration de l'état des surfaces des plaques (10), qui est la source essentielle de la disparition du phénomène de colmatage, permet d'envisager des reliefs (14) d'une profondeur beaucoup plus importante que celle actuellement réalisable qui ne dépasse pas 1 mm. On a pu réaliser des reliefs (14) ayant une profondeur allant jusqu'à 6 mm, et des profondeurs supérieures peuvent même être prévues.

Comme il va de soi et comme il résulte d'ailleurs déjà de ce qui précède, l'invention ne se limite nullement à ceux de ses modes d'application et de réalisation qui ont été plus particulièrement envisagés; elle en embrasse, au contraire, toutes les variantes.

## Revendications

1. Plaque intercalaire (10) destinée à être utilisée pour la fabrication, à chaud et sous très haute pression, de panneaux de grandes dimensions en matériau fibres-ciment, caractérisée en ce qu'elle est constituée en résine époxy (11) avec des faces principales présentant un état de surface glacé résultant de la polymérisation de respectivement deux couches externes constituées d'un voile sec en mat de verre non tissé (13) et encadrant un empilement de tissus unidirectionnels en verre (12), préimprégnés de résine époxy (11), disposés en couches successives présentant des orientations mutuellement différentes d'une couche à la suivante.

2. Plaque intercalaire (10) selon la revendication 1, caractérisé en ce que les tissus préimprégnés unidirectionnels de couches successives sont disposés sensiblement perpendiculairement les uns aux autres.

3. Plaque intercalaire (10) selon la revendication 1 ou 2, caractérisée en ce que l'une au moins des faces est munie de reliefs (14).

4. Procédé de fabrication de plaques intercalaires (10) destinées à être utilisées pour la fabrication, à chaud et sous très haute pression, de panneaux de grandes dimensions en matériau fibres-ciment, caractérisé en ce qu'il comprend les étapes qui suivent réalisées avec un moule (1) présentant une matrice (2) de moulage pourvue d'une empreinte de moulage (3) obturable par un couvercle (5) :
- On enduit une empreinte de moulage (3) avec un produit démoulant compatible avec la résine contenue dans la matériau à mouler, ce produit démoulant étant étendu à froid;
- On met en place dans le moule (1) un voile sec en mat de verre non tissé (13) formant une couche externe;
- On dispose, sur le dit voile, plusieurs couches de tissus unidirectionnels en verre (12), préimprégnés de résine époxy (11), qui sont empilées avec des orientations mutuellement différentes d'une couche à la suivante;
- On met en place, sur l'empilement de tissus préimprégnés, un autre voile sec en mat de verre non tissé (13), constituant une autre couche externe;
- On ferme le moule (1) dont la face interne du couvercle (5) a été enduite dudit produit démoulant;
- Et on fait subir au contenu du moule (1) un traitement de polymérisation à une température comprise entre 115°C et 125°C et sous une pression comprise entre 3 et 5 bars.

5. Procédé selon la revendication 4, caractérisé en ce que la face principale (4) de l'empreinte de moulage (3) du moule (1) comporte des reliefs.

6. Procédé selon la revendication 4 ou 5, caractérisé en ce que le produit démoulant est étendu dans le moule (1) toutes les deux ou trois opérations de moulage

7. Moule (1) pour la mise en oeuvre du procédé selon l'une quelconque des revendications 4 à 6, comprenant une matrice (2) présentant une empreinte de moulage (3) et un couvercle (5) d'obturation destiné à fermer la matrice (2), caractérisé en ce que la matrice (2) présente en outre une gorge (6) de recueil d'un excès de résine qui entoure l'empreinte (3) et est séparée de celle-ci par une paroi de séparation (7) ayant une hauteur sensiblement inférieure à la hauteur des parois latérales (8) de la matrice (2) entourant extérieurement la gorge (6) et en ce que le couvercle (5) repose sur les parois latérales (8) de la matrice (2), un intervalle (9) subsistant entre la paroi de séparation (7) et le couvercle (5) pour l'écoulement d'un excédent de résine depuis l'empreinte (3) jusque dans la gorge (6) de recueil.

8. Moule (1) selon la revendication 7, caractérisé en ce que le fond (4) de l'empreinte (3) présente des reliefs.

9. Moule (1) selon la revendication 7 ou 8, caractérisé en ce que la matrice (2), au moins, est constituée en résine chargée.

10. Moule (1) selon la revendication 9, caractérisé en ce que la matrice (2) est fabriquée par moulage d'une résine chargée sur une forme "mère".

## Claims

1. Insert sheet (10) intended to be used for the manufacture, hot and at very high pressure, of large-sized panels made of fibre-cement material, characterized in that it is made of epoxy resin (11) with principal faces having a glazed surface finish resulting from the polymerization of respectively two external plies consisting of a dry web of nonwoven glass mat (13) and flanking a stack of unidirectional glass fabrics (12), which fabrics are pre-impregnated with epoxy resin (11) and arranged in successive plies having mutually different orientations from one ply to the next.

2. Insert sheet (10) according to Claim 1, characterized in that the unidirectional pre-impregnated fabrics of successive plies are arranged substantially perpendicular to one another.

3. Insert sheet (10) according to Claim 1 or 2, characterized in that at least one of the faces is provided with reliefs (14).

4. Process for manufacturing insert sheets (10) which are intended to be used for the manufacture, hot and at very high pressure, of large-sized panels made of fibre-cement material, characterized in that it comprises the following steps, carried out with a mould (1) having a mould die (2) provided with a mould cavity (3) which can be closed off by a cover (5):
- a mould cavity (3) is coated with a mould-release substance compatible with the resin contained in the material to be moulded, this mould-release substance being cold-extended;
- a dry web of nonwoven glass mat (13) forming an external ply is put into the mould (1);
- several plies of unidirectional glass fabrics (12), which fabrics are pre-impregnated with epoxy resin (11), are arranged on the said web, these plies being stacked in mutually different orientations from one ply to the next;
- another dry web of nonwoven glass mat (13), constituting another external ply, is put on the stack of pre-impregnated fabrics;
- the mould (1), the internal face of the cover (5) of which has been coated with the said mould-release substance, is closed;
- and the contents of the mould (1) are subjected to a polymerization treatment at a temperature of between 115°C and 125°C and at a pressure of between 3 and 5 bar.

5. Process according to Claim 4, characterized in that the principal face (4) of the mould cavity (3) of the mould (1) includes reliefs.

6. Process according to Claim 4 or 5, characterized in that the mould-release substance is extended in the mould (1) every two or three moulding operations.

7. Mould (1) for implementing the process according to any one of Claims 4 to 6, comprising a die (2) having a mould cavity (3) and a closing-off cover (5) intended to close the die (2), characterized in that the die (2) furthermore has a groove (6) for collecting excess resin, which groove surrounds the cavity (3) and is separated from the latter by a separating wall (7) having a height substantially less than the height of the side walls (8) of the die (2) which surround the groove (6) on the outside and in that the cover (5) rests on the side walls (8) of the die (2), a gap (9) existing between the separating wall (7) and the cover (5) for the flow of excess resin from the cavity (3) right into the collecting groove (6).

8. Mould (1) according to Claim 7, characterized in that the bottom (4) of the cavity (3) has reliefs.

9. Mould (1) according to Claim 7 or 8, characterized in that the die (2), at least, is made of a filled resin.

10. Mould (1) according to Claim 9, characterized in that the die (2) is manufactured by moulding a filled resin over a master form.

## Patentansprüche

1. Zwischenplatte (10), die zur Anwendung für die Herstellung von Bauplatten großer Abmessungen aus Faser-Zement-Material untor Wärmewirkung und unter sehr hohem Druck bestimmt ist, dadurch gekennzeichnet, daß sie aus Epoxyharz (11) gebildet ist und mit Hauptflächen, die einen geglätteten Oberflächenzustand aufweisen, der sich aus der Polymerisation der bzw. zweier äußerer Lagen ergibt, die aus einer trockenen Decklage (13) aus nicht gewebter Glasmatte gebildet sind, und einen Stapel aus in einer Richtung verlaufenden, mit Epoxyharz (11) vorimprägnierten Glasgeweben (12) einschließt, die in aufeinanderfolgenden Lagen angeordnet sind, die von einer Lage zur anderen gegenüber einander verschiedene Ausrichtungen aufweisen.

2. Zwischenplatte (10) nach Anspruch 1, dadurch gekennzeichnet, daß die in einer Richtung verlaufenden vorimprägnierten Gewebe der aufeinanderfolgenden Lagen im wesentlichen senkrecht zueinander angeordnet sind.

3. Zwischenplatte (10) nach Anspruch 1 oder 2, dadurch gekennzeichnet, daß wenigstens eine der Oberflächen mit Reliefs (14) versehen ist.

4. Verfahren zur Herstellung von Zwischenplatten (10), die zur Verwendung für die Herstellung von Bauplatten großer Abmessungen aus Faser-Zement-Material unter Wärmewirkung und unter sehr hohem Druck bestimmt ist, dadurch gekennzeichnet, daß es die folgenden Schritte aufweist, ausgeführt mit einer Gießform (1), die eine Gießmatrize (2) aufweist, die mit einem Gießhohlraum (3) versehen ist, der durch eine Abdeckung (5) verschließbar ist:
- Man überzieht den Formhohlraum (3) mit einem Entformungsmittel, das mit dem im zu gießenden Material kompatibel ist, wobei dieses Entformungsmittel auf kaltem Weg aufgetragen wird;
- Man bringt in die Gießform (1) eine trockene Decklage (13) in Form einer nicht gewebten Glasmatte ein, die eine äußere Lage bildet;
- Man ordnet auf dieser Decklage mehrere Lagen in einer Richtung verlaufenden Glasgewebes (12) an, das vorimprägniert ist mit Harz (11), welche Lagen mit von einer Lage zur anderen zueinander verschiedenen Ausrichtungen gestapelt werden;
- Man ordnet auf dem Stapel der vorimprägnierten Glasgewebe eine weitere trockene Decklage (13) in Form einer nicht gewebten Glasmatte an, die eine weitere äußere Lage bildet;
- Man schließt die Form, bei der die innere Oberfläche der Abdeckung (5) mit dem genannten Entformungsmittel überzogen ist;
- Und man unterwirft den Inhalt der Gißform (1) einer Polymerisationsbehandlung bei einer Temperatur zwischen 115° C und 125° C und unter Druck zwischen 3 und 5 bar.

5. Verfahren nach Anspruch 4, dadurch gekennzeichnet, daß die Hauptfläche (4) des Formhohlraums (3) der Gießform (1) Reliefs aufweist.

6. Verfahren nach Anspruch 4 oder 5, dadurch gekennzeichnet, daß das Entformungsmittel in die Gießform (1) alle zwei oder drei Gießvorgänge eingebracht wird.

7. Gießform (1) zur Durchführung des Verfahrens nach einem der Ansprüche 4 bis 6, die eine einen Formhohlraum (3) enthaltende Matrize (2) und eine Verschließ-Abdeckung (5) aufweist, die zum Schließen der Matrize (2) bestimmt ist, dadurch gekennzeichnet, daß die Matrize (2) außerdem eine Auskehlung (6) zum Sammeln eines Überschusses an Harz aufweist, die den Formhohlraum (3) umgibt und von diesem durch eine Trennwand (7) getrennt ist, die eine etwas geringere Höhe als die Höhe der außen die Auskehlung (6) umgebenden Seitenwände (8) der Matrize aufweist, und daß die Abdeckung (5) auf den Seitenwänden (8) der Matrize (2) aufliegt, wobei ein Zwischenraum (9) zwischen der Trennwand (7) und der Abdeckung (5) besteht für den Abfluß eines Überschusses des Harzes vom Formhohlraum (3) bis zur Sammel-Auskehlung (6).

8. Gießform (1) nach Anspruch 7, dadurch gekennzeichnet, daß der Boden (4) des Formhohlraums (3) Reliefs aufweist.

9. Gießform (1) nach Anspruch 7 oder 8, dadurch gekennzeichnet, daß wenigstens die Matrize (2) aus bewehrtem Harz gebildet ist.

10. Gießform (1) nach Anspruch 9, dadurch gekennzeichnet, daß die Matrize (29 durch Gießen eines bewehrten Harzes auf einer "Mutter"-Form hergestellt ist.
